**Europäisches Patentamt**

**European Patent Office**

**Office européen des brevets**

(19)

(11) Numéro de publication: **0 065 522**
**B1**

(12) ## FASCICULE DE BREVET EUROPEEN

(45) Date de publication du fascicule du brevet: **27.12.84**

(51) Int. Cl.³: **A 61 C 1/16,** A 61 C 1/08

(21) Numéro de dépôt: **81902684.0**

(22) Date de dépôt: **08.10.81**

⑧ Numéro de dépót international:
**PCT/CH81/00113**

(87) Numéro de publication internationale:
**WO 82/01309 29.04.82 Gazette 82/11**

(54) **TURBINE DENTAIRE.**

(30) Priorité: **10.10.80 CH 7576/80**

(43) Date de publication de la demande:
**01.12.82 Bulletin 82/48**

(45) Mention de la délivrance du brevet:
**27.12.84 Bulletin 84/52**

(84) Etats contractants désignés:
**AT DE FR GB**

(56) Documents cités:
**DE-C- 417 708**
**DE-C- 581 003**
**US-A-3 955 284**

(73) Titulaire: **MOSIMANN, David**
**13-15, chemin des Grillons**
**CH-2504 Bienne 6 (CH)**

(72) Inventeur: **MOSIMANN, David**
**13-15, chemin des Grillons**
**CH-2504 Bienne 6 (CH)**

Courier Press, Leamington Spa, England.

EP 0 065 522 B1

## Description

L'invention concerne une turbine dentaire.

Le rotor logé dans la tête d'une turbine à air pour fraises dentaires est constitué d'un axe qui peut être monté sur des roulements à billes ou des paliers à air. L'axe comporte un logement dans lequel est situé le mécanisme de fixation de la fraise. Il se prolonge vers l'extérieur en traversant un alésage prévu dans le nez de la turbine.

Dans la tête de la turbine, le rotor est lui-même monté sur des anneaux en matière souple ou des bagues toriques qui en assurent la suspension radiale notamment. Cela signifie que le rotor est susceptible de subir des déplacements radiaux suivant la pression exercée sur la tête de la turbine. Il est dès lors nécessaire que le diamètre de l'alésage prévu dans le nez de la turbine soit suffisamment plus grand que le diamètre de l'axe afin d'éviter que celui-ci, lorsqu'il tourne, vienne buter et frotter contre la paroi de l'alésage. Un espace existe donc entre l'axe et l'alésage prévu dans le nez de la turbine par lequel de la dentine, de la poussière d'émail, du sang, des résidus de plombage et d'autres déchets peuvent s'infiltrer lorsque la turbine est en action. Ces déchets sont propulsés jusqu'à la hauteur du palier situé du côté du nez de la turbine et des conduits d'arrivée d'air qu'ils viennent encrasser et obstruer. La fiabilité des turbines dentaires répondant aux caractéristiques prédécrites se trouve ainsi mise en péril. Leur palier situé du côté du nez de la turbine et les conduits d'arrivée d'air doivent être régulièrement nettoyés, voire remplacés.

La présente invention vise la réalisation d'une turbine dentaire à roulements à billes ou à un ou plusieurs paliers à air, conçue de telle façon que les déchets de toutes sortes susceptibles de s'infiltrer en elle par la voie décrite ci-dessus soient empêchés d'atteindre les organes vitaux du rotor, c'est-à-dire le roulement ou le palier à air situé du côté du nez de la turbine ainsi que les conduits d'arrivée d'air.

La turbine dentaire selon l'invention comporte une douille de protection en une seule pièce composée d'une première partie cylindrique ajustée sur la paroi extérieure du palier situé du côté du nez de la turbine, d'une seconde partie prolongeant la première radialement vers l'axe du rotor de manière à recouvrir la face radiale du palier tournée vers l'alésage du nez de turbine et d'une troisième partie cylindrique qui prolonge la seconde axialement le long du dit axe du rotor jusque dans l'espace radial prévu entre celui-ci et l'alésage. De plus, l'anneau de suspension du palier qui est enveloppé par la douille est monté autour de la première partie cylindrique de celle-ci.

De préférence, un anneau en matière souple est comprimé entre la paroi extérieure de la troisième partie cylindrique de la douille de protection et la paroi intérieure de la tête de la turbine.

Les dessins annexés représentent, à titre d'exemple, une forme d'exécution possible de l'invention.

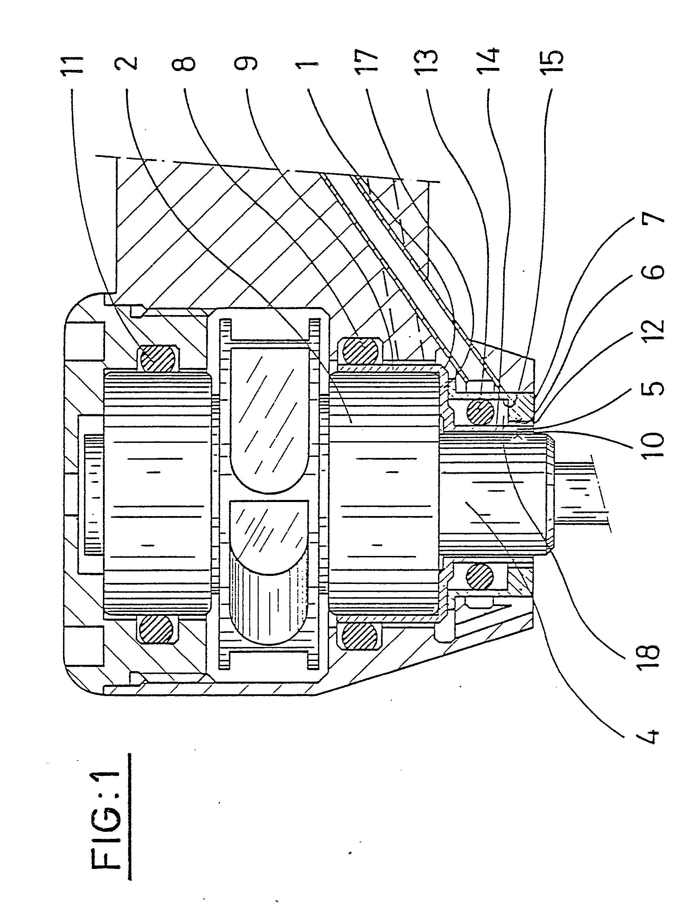

La fig. 1 est une vue en coupe transversale de la tête de la turbine.

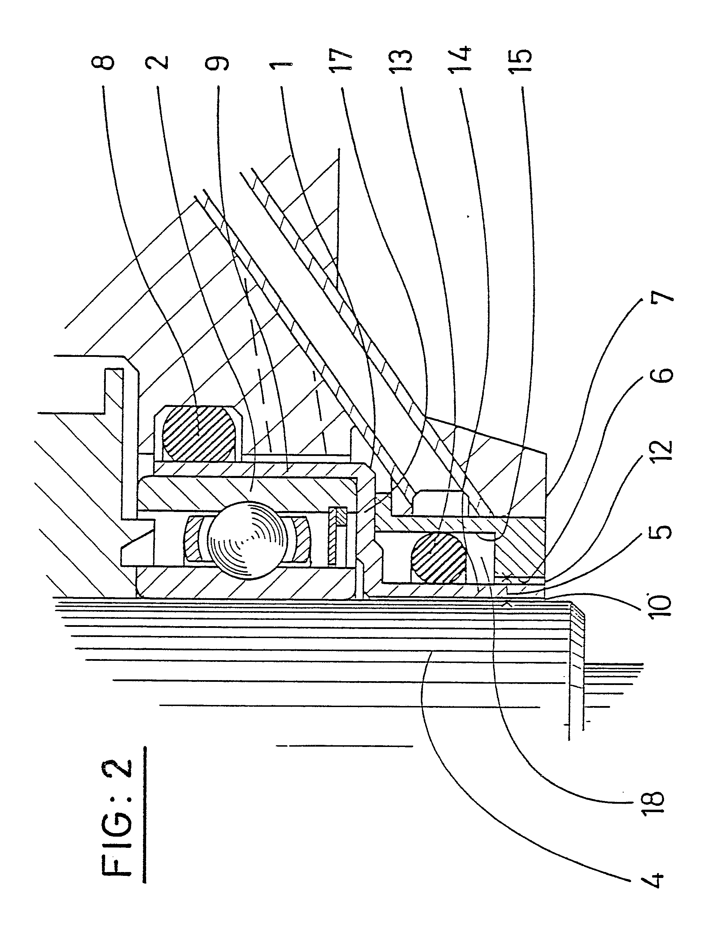

La fig. 2 est une vue partielle de la fig. 1.

La douille de protection 1 qui est d'une seule pièce se compose d'une première partie cylindrique 9, d'une partie intermédiaire 17 et d'une seconde partie cylindrique 14. Sa première partie cylindrique 9 est ajustée sur la bague extérieure 2 d'un roulement à billes. La douille 1 de protection se prolonge, par sa partie intermédiaire 17, radialement vers l'axe 4 du rotor de manière à recouvrir la face radiale du roulement tournée vers l'alésage 6 du nez 7 de la turbine puis, par sa seconde partie cylindrique 14, axialement le long de l'axe 4 jusque dans l'espace radial 5 existant entre ce dernier et la paroi de l'alésage 6 prévu dans le nez 7 de la turbine. Elle enveloppe donc l'ensemble constitué par la bague extérieure 2 du roulement à billes, la face radiale de ce dernier située du côté du nez 7 de la turbine et la partie inférieure de l'axe 4. Elle est solidaire de la bague extérieure 2 du roulement à billes et, de ce fait, de l'ensemble du rotor dont elle suit les éventuels déplacements radiaux. L'anneau tonique de suspension 8 prend appui sur la paroi extérieure de la première partie cylindrique 9 de la douille 1 de protection. Un espace radial 10 doit être ménagé entre l'axe 4 et la paroi intérieure de la seconde partie cylindrique 14 de la douille 1 de protection visant à éviter tout frottement entre ces éléments lorsque l'axe 4 tourne. Toutefois, la douille 1 de protection étant solidaire de l'ensemble du rotor, cet espace 10 peut être infiniment petit.

En outre, pour conserver au rotor sa qualité d'élément suspendu par l'effet des anneaux toriques de suspension 8 et 11, un espace radial 12 suffisant doit être ménagé entre la paroi extérieure de la seconde partie cylindrique 14 de la douille 1 de protection et l'alésage 6 pratiqué dans le nez 7 de la turbine.

Lorsque la turbine est en action, des déchets de toutes sortes peuvent pénétrer en elle, soit par l'espace radial 10 entre l'axe 4 et la paroi intérieure de la seconde partie cylindrique 14 de la douille 1 de protection, soit par l'espace radial 12 entre la paroi extérieure de la seconde partie cylindrique 14 de la douille de protection 1 et l'alésage 6 pratiqué dans le nez 7 de la turbine.

Cependant, l'espace 10 est infiniment petit et se prête difficilement au passage de déchets. De plus, le mouvement rotatif de l'axe 4 tend à éliminer les déchets qui auraient pu s'infiltrer par le dit espace 10.

Les déchets qui pourraient pénétrer à l'intérieur de la turbine par l'espace 12 iront s'accumuler dans le logement 18 compris entre la paroi intérieure 15 de la tête de la turbine et la paroi extérieure de la seconde partie cylindrique 14 de la douille 1 de protection où ils seront contenus par un anneau en matière souple 13 comprimé dans le logement 18.

## Revendications

1. Turbine dentaire composée d'une tête et d'un rotor monté rotatif dans des paliers à roulements ou à air supportés radialement par l'intermédiaire d'anneaux de suspension souples (8, 11) logés dans la tête de la turbine, le rotor se prolongeant vers l'extérieur par un axe (4) qui traverse un alésage (6) pratiqué dans le nez de la turbine, un jeu radial (5) étant prévu entre l'alésage (6) et l'axe (4) pour autoriser des déplacements radiaux de ce dernier, caractérisée en ce qu'elle comporte une douille (1) de protection en une seule pièce composée d'une première partie cylindrique (9) ajustée sur la paroi extérieure (2) du palier situé du côté du nez de la turbine, d'une partie intermédiaire (17) prolongeant la première partie cylindrique (9) radialement vers l'axe (4) du rotor de manière à recouvrir la face radiale du palier tournée vers l'alésage (6) du nez de turbine et d'une seconde partie cylindrique (14) qui prolonge la partie intermédiaire (17) axialement le long du dit axe (4) du rotor jusque dans l'espace radial (5) prévu entre celui-ci et l'alésage (6), et en ce que l'anneau de suspension (8) du palier qui est enveloppé par la douille (1) est monté autour de la première partie cylindrique (9) de celle-ci.

2. Turbine dentaire selon la revendication 1, caractérisée en ce qu'un anneau en matière souple (13) est comprimé entre la paroi exterieure de la seconde partie cylindrique (14) de la douille (1) de protection et la paroi intérieure (15) de la tête de la turbine.

## Claims

1. A dental turbine comprising a turbine head and a rotor mounted in anti-friction or air bearings supported radially via flexible suspension rings (8, 11) housed in the head of the turbine. The rotor is extended outward by a shaft (4) which passes through the bore (6) in the nose (7) of the turbine, a radial clearance (5) being provided between the bore (6) and the shaft (4) so that the latter can move axially, said turbine comprising a protection socket (1) in one piece consisting of a first cylindrical portion (9) fitted to the outer wall (2) of the bearing located by the nose of the turbine, of an intermediate portion (17) which extends the first cylindrical portion (9) radially towards the shaft (4) of the rotor in such manner as to cover the radial face of the bearing facing the bore (6) of the nose of the turbine and of a second cylindrical portion (14) which extends the intermediate portion (17) in the axial direction along said shaft (4) of the rotor up to and into the radial clearance (5) provided between the latter and the bore (6), said turbine also being such that the suspension ring (8) of the bearing which is enclosed by the socket (1) is mounted around the first cylindrical portion (9) of the socket (1).

2. The combination claimed in claim 1, a flexible ring (13) being pressed between the outer wall of the second cylindrical portion (14) of the protective socket (1) and the inner wall (15) of the turbine head.

## Patentansprüche

1. Turbinengetriebenes zahnärztliches Handstück, bestehend aus einem Kopfteil und einem drehenden Anker auf Rollen- oder Luftlagern, welche radial über im Turbinenkopf angeordnete, flexible Ringe (8, 11) gehalten werden, mit Verlängerung des Ankers nach aussen über eine Welle (4), welche durch eine Bohrung (6) in der Turbinennase bei genügendem Radialspiel (5) zwischen Bohrung (6) und Welle (4) zur Ermöglichung radialer Bewegungen der Welle geführt wird, gekennzeichnet
— durch eine einteilige Schutzhülse (1), bestehend aus
— einem ersten zylindrischen Teil (9), der an der Aussenwand (2) des nasenseitigen Lagers angebaut ist
— einem Zwischenteil (17), der den ersten zylindrischen Teil (9) radial zur Ankerwelle (4) so verlängert, dass die der Bohrung (6) der Turbinennase zugewandte Radialseite des Lagers zugedeckt wird
— sowie aus einem zweiten zylindrischen Teil (14), welcher den Zwischenteil (17) entlang der besagten Ankerwelle (4) bis in den zwischen der Ankerwelle und der Bohrung (6) befindlichen Radialraum axial verlängert
— sowie durch die Tatsache, dass der Aufhängungsring (8) für das Lager in der Hülse (1) um den ersten zylindrischen Teil (9) derselben angeordnet ist.

2. Turbinengetriebenes zahnärztliches Handstück gemäss Anspruch 1, gekennzeichnet durch die Tatsache, dass ein Ring aus flexiblem Material (13) zwischen der Aussenwand des zweiten zylindrischen Teils (14) der Schutzhülse (1) und der Innenwand (15) des Turbinenkopfes eingepresst ist.

FIG:1

11
2
8
9
1
17
13
14
15

0065 522

4    18                10    5    12    6    7

FIG: 2

8

2

9

1

17

13

14

15

4

18

10

5

12

6

7

0065 522